# EUROPEAN PATENT SPECIFICATION

(11) **EP 0 515 744 B1**
(45) Date of publication and mention of the grant of the patent: **29.04.1998**
(21) Application number: 91304911.0
(22) Date of filing: 30.05.1991
(51) Int. Cl.: C21B 13/00, B65G 53/06

(54) **Method for the transport of sponge iron**
Verfahren zum Transportieren von Eisenschwamm
Procédé de transport d'éponge de fer

(43) Date of publication of application: 02.12.1992
(73) Proprietor: HYLSA, S.A. de C.V., Monterrey Nuevo Leon (MX)
(72) Inventor: Becerra-Nova, Jorge Octavio, Apodaca, Nuevo Leon (MX); Viramontes-Brown, Ricardo, Garza Garcia, Nuevo Leon (MX); Flores-Verdugo, Marco Aurelio, Monterrey, Nuevo Leon (MX); Garza- Ondarza, Jose Javier, San Nicolas de los Garza, Nuevo Leon (MX)
(74) Representative: Garratt, Peter Douglas

(56) References cited:
- EP-A- 0 021 222
- DE-A- 3 201 608

## Description

The present invention relates to a method applicable in the production of iron and steel, wherein a direct reduction process is employed to produce an intermediate product in the form of a particulate solid, commonly known as sponge iron or Direct Reduced Iron (DRI). More particularly, the invention is characterized by the produced DRI (at least 90% of which is preferably larger than 5 mm) being pneumatically transported from the reduction reactor of said direct reduction process to a remote location for subsequent storage or processing, e.g. preferably to melting metallurgical furnaces to produce liquid iron and steel.

In the recent years, the necessity of rendering the steelmaking processes more efficient, more productive, and less wasteful, has become increasingly urgent, due to rising production costs (particularly energy costs) and also due to the increasing restrictions imposed upon steel plants for ecological reasons.

One of the successful routes for producing steel, which is being increasingly promoted and has become more widely utilized, is the direct reduction without melting of lumps or pellets of ore with subsequent electric arc furnace refining. This is in contrast to the traditional steel plants using blast furnaces and basic oxygen converter furnaces for making steel from melted ore. Although in the present specification a preferred embodiment of the invention is described as applied to a steelmaking plant comprising a direct reduction plant and electric arc furnaces, it is evident that the invention in its broader aspects can be adapted to other applications where DRI or other hot metallic iron bearing particles are to be transported.

In order to better understand the invention, some of the characteristics of DRI are given herein, which will help one to appreciate why pneumatic transport systems had never been previously recommended for commercialized DRI nor ever successfully used before with this material.

DRI is commercially produced by direct reduction of lumps or pellets of iron ore by contacting these with a stream of reducing gas at a high temperature. Reduction is carried out in the solid state. The resulting DRI is a friable particulate solid which is very porous and reactive at high temperatures. At such elevated temperatures, it reoxidizes exothermically with water or oxygen in the ambient air.

Iron ores employed for direct reduction are generally iron oxides: hematite and magnetite. When the iron ore has a high iron content, for example above 55%, it can be economically processed by simply breaking it down to particle sizes at least 80% and preferably at least 90% of which are greater than 0.5 cm and range up to about 6 cm (i.e. 0.2 to 2.4 inches). It is also necessary that said ore has a high mechanical strength so as to withstand pressures, shocks and crushing which tend to create undesirable and excessive fines during its transport and handling. Such dust-like fines can cause considerable problems, such as uneven flow and gas channelling inside the fixed or moving bed reduction reactor. This results in unhomogeneous reduction, thus producing DRI of an inferior and uneven quality.

In order to render it mechanically stronger, it is preferred in many cases, to grind the iron ore, magnetically concentrate it to increase its iron content, include some additives such as lime and dolomite, and form it into pellets in the 0.5 to 2.4 cm range. In this pelletizing process, the pellets formed are generally spherical with the desired chemical composition needed for optimal performance in the reduction process and also in the subsequent steelmaking stage in the electric arc furnace. Since pellets have a higher iron content with a more uniform quality, they can consequently be transported over long distances by truck, rail, etc., more economically (because the unnecessary transportation of a substantial amount of gangue is avoided).

Direct reduction plants chemically reduce iron ores by contacting the particles, which may be irregularly shaped pieces of iron ore or pellets or mixtures thereof, with a stream of reducing gas, largely composed of hydrogen and carbon monoxide, at a temperature between 850 and 1,050°C, normally at about 950°C.

The commercial reduction reactor may be of the fixed bed or moving bed type. It is evident that in order to increase the reaction rate between the solid ore particles and the reducing gas, it is desirable that said particles be highly porous. However, this characteristic also makes DRI very reactive, since it contains a high proportion of metallic iron, which tends to reoxidize when in contact with the oxygen in air or water. As is typical of all chemical reactions, reoxidation of DRI is faster and more violent as the temperature increases. This is why DRI in the past always has most desirably been safely handled at ambient temperature and is normally cooled down inside the reduction reactor by circulating a cooling gas therethrough before it is discharged. See, for example, U.S. Patent Nos. 3,765,872; 4,046,557; 4,150,972, and Stahl u.Eisen 110(1990) No. 8.

Cooling DRI, although commonly necessary for the safe handling of the DRI to avoid reoxidation problems and to reduce the need for expensive temperature resistent pumps, valves, etc., is however disadvantageous with respect to the energy efficiency of the overall steelmaking process. Since much of the thermal energy of the DRI is lost through its cooling; therefore, it is necessary to spend more energy to heat the DRI once again in order to melt it and convert it to steel. Only some of the lost energy is usefully recovered in steam generation, in heat exchangers, and the like.

To meet this problem, it has been proposed in the past to omit cooling the DRI in the reduction reactor and to discharge it at the highest feasible temperature, normally in the range of 400 to 750°C ., in order to decrease energy cost in the electric furnaces where DRI is melted, or alternatively to hot briquet the DRI, commonly at temperatures above 600°C. This represents substantial energy savings. However, transportation of DRI at high temperature has so far involved using systems which have significant drawbacks.

U.S. patents 3,799,367 and 4,188,022 teach discharging DRI at a high temperature from a direct reduction reactor without cooling it down to ambient temperature. It is proposed to transport this hot DRI to its next processing step, utilizing containers which are placed at the outlets of the discharge bins of the reduction reactor. These containers are filled with an inert gas to prevent contact of hot DRI with oxygen in the air, thus avoiding reoxidation thereof. This transport system, however, presents a number of disadvantages, because the containers with DRI must be moved through the plant by means of trucks or railroad equipment. This requires a maintenance system for motorized vehicles with its consequent high operating costs.

Furthermore, such a system also needs transit space within the plants. In an already existing plant, it is very difficult to open suitable space for transit of trucks or a railroad, if such installations are not planned beforehand.

As previously discussed, it has been also proposed in the past to form the DRI particles into briquettes while at high temperature; see Stahl u. Eisen (op.cit). Compaction of DRI particles into dense briquettes decreases substantially the porosity and thereby its reactivity. However, even if only for hot DRI transport to the briquetting press, systems currently in use are complicated and involve large investment and high operating costs.

German patent No. 3806861 teaches transport of hot DRI in a bin. Such bins are used with pressure locks in some direct reduction processes operating at pressures over one atmosphere. These processes require pressure locks for charge and discharge of the reduction reactor. This transport system is however applicable only to short distances, for example from the reduction reactor to a briquetting press located close to said reactor. If DRI is to be transported over longer distances, for example hundreds of meters, this system using pressure lock bins is not practical nor economical since it would require a larger number of such bins, which, due to their required characteristics for pressure, temperature and abrasion resistance as well as their sealing valves, are expensive.

By far the most common current practice for DRI transportation involves discharge from the reactor at low temperatures, for example at temperatures below 100°C, and utilization of open belt conveyors. DRI is moved by means of these belt conveyors, to silos or storage bins and then to feeding bins of the electric furnaces at the meltshop. This method, however, has several drawbacks. For example, the fines, e.g. the very small particles produced from the abrasion and breakage of ore lumps, of pellets, or of DRI inside the reduction reactor and during DRI handling, are spilled at transfer points and are entrained by ambient air currents passing over the open conveyors with the consequent problems of losses of valuable metallic iron units and of significant environmental pollution. These losses of metallic iron, which mainly occur at the transfer stations of the DRI, can be as high as 2% to 10% of DRI production, depending on the type of facilities.

Non-commercialized attempts to produce DRI by fluidized bed direct reduction methods have been proposed from time-to-time. These teach the use of very fine-grained ores up to only 3 mm in diameter and preferably less than 0.5 mm). In dealing with a grain size appropriate to being fluidized, a few such references have suggested pneumatic transport of such "fine-grained sponge iron" (see U.S. Patents 4,007,034, 4,045,214, DE 3201608-A and EP-A-021222. However U.S. Patent 4,412,858 is the only reference known to applicants which is relevant to the commercially-proven larger-sized DRI particles (i.e. greater than 0.5 cm) that has any suggestion of pneumatic transport of DRI. Yet, even this latter patent's teaching is only in the context of the larger "sponge iron pellets [being] . . . converted to finely divided form" by "grinding or milling" prior to transport by a carrier gas.

Crushed limestone is reported to have been pneumatically transported over short distances as a feed device; however, this is a relatively soft material as compared to DRI (or even to iron ore). Thus, in spite of such uses, such lime transport has never been extended to or suggested for iron ore or for DRI of a size greater than 3 mm.

There is also considerable literature on pneumatic transport of catalyst particles in the petroleum industry, but always of smaller particles of a size appropriate for use in a fluidized bed.

It is an object of the present invention to provide a method for the production of iron and steel employing a system for transportation of commercial-size DRI at high temperatures, which is economically applicable to short and long distances, which increases the productivity of a steelmaking plant by avoiding losses of DRI fines and of reoxidation, and which minimizes the problem of environmental pollution caused by said fines.

Other objects and advantages of the invention will be evident to those skilled in the art or will be described in this specification of the invention and appended drawings.

According to one aspect of the invention there is provided a method of transporting iron-bearing particles from a departure point to a remote point for storage or further processing, comprising introducing said iron-bearing particles into a closed conduit, causing a stream of gas to transport pneumatically the iron-bearing particles through the closed conduit to said remote point, and separating said gas from said particles at said remote point, characterised in that at least 80% of the iron-bearing particles are of a size greater than 0.5 cm and at least 50% are of a size greater than 1.0 cm, the iron-bearing particles being introduced into said conduit when they are hot, the gas stream being substantially non-oxidising.

Preferably the particles are introduced into the closed conduit at a temperature of at least 400°C.

In another aspect the invention provides a method of transporting hot iron-bearing particles such as iron ore or sponge iron, from a departure point to a remote point for storage or further processing, comprising introducing said iron-bearing particles into a closed conduit, causing a stream of gas to transport pneumatically the iron-bearing particles through the closed conduit to said remote point, and separating said gas from said particles at said remote point, characterised in that at least 80% of the iron- bearing particles are of a size greater than 0.5 cm and at least 50% are of a size greater than 1.0 cm, the iron-bearing particles being introduced into said conduit at a temperature above 400°C.

Preferred embodiments are disclosed in the dependent claims 4 to 20.

The invention also provides an iron processing plant comprising a transport system for iron-bearing particles, said system including a closed conduit, introducing means for introducing said particles into the conduit at a departure point, means for passing a gas stream through the conduit with flow characteristics such as to transport pneumatically the iron-bearing particles through the conduit from the departure point to a remote point, and means for delivering said particles from the conduit at the remote point, the plant further comprising a direct reduction reactor adapted to provide hot iron-bearing particles, 80% of which particles are of a size greater than 0.5 cm and at least 50% of which are of a size greater than 1.0 cm, said reactor being arranged to deliver the particles uncooled to the introducing means, the means for passing a gas stream being arranged to utilise a substantially non oxidising gas as said gas stream. and apparatus for receiving the iron bearing particles at the remote point for storage or further processing.

Preferably there are means for preheating the gas stream.

The reactor may be a vertical shaft moving bed reduction reactor with a reduction zone and a discharge zone;
the closed conduit being
a particulate solids pneumatic pipe conveyor with a particle handling bin laterally remote from and non-aligned vertically with respect to said reactor, means for passing a gas stream being arranged for supplying a carrier gas at a pressure and velocity sufficient to lift upwardly and pneumatically transport said particles between said reactor and said bin.

Other preferred features are as set out in the subordinate claims.

Thus the invention in its preferred form achieves a method for the production of iron and steel wherein hot DRI of a size largely over 0.5 cm is pneumatically transported. This preferably comprises producing said DRI in at least one direct reduction reactor and transporting such DRI pneumatically by means of a non-oxidising carrier gas caused to flow through a duct extending from a first point (at the discharge into said duct of said DRI from said reduction reactor) to a second point (of remote use or storage of the DRI). Said gas stream may have a variety of chemical compositions. For example, exhausted air, natural gas, synthesis gas or reducing gas of the same type used for DRI production may be utilized. Pneumatic transport of DRI is preferably carried out at a carrier gas velocity in the range of 9 to 35 m/sec., at a pressure of between 1 and 5 kg/cm², and at a ratio of mass of DRI to mass of carrier gas between 7 and 25. Preferably, the gas stream is air which has been contained and recirculated.

The problems and drawbacks of hot transportation of commercial DRI in steelmaking plants, have not heretofore been satisfactorily solved. The present invention effectively minimizes these problems to great advantage, by surprisingly teaching contrary to conventional wisdom the use of pneumatic transport of DRI of a size mainly in excess of 0.5 cm in steelmaking plants, while modifying the transport operating conditions to achieve offsetting advantages of minimized reoxidation, minimized heat loss, containment against air and ground pollution, and less handling and storage requirements (thus resulting in less overall maintenance and space requirements for handling), all unexpectedly without excessive abrasion of the transport equipment and fractionation of the DRI.

Normally pneumatic transport has been applied to convey very small particles, e.g. powders. In the very rare applications of pneumatic transport of high density particles having a size larger than 1 cm, such installations have not operated at a continuous rate due to the rapid and substantial deterioration of the ducts caused by the impacts of said particles. The present invention minimizes this problem by the particular velocity range at which it operates and renders possible its industrial application.

One of the problems presented by the application of pneumatic transport of DRI, is fines formation which is caused by the strong collision of particles against the pipe wall, principally at direction changes. This is surprisingly minimized by the counter-intuitive use of right angle T-junctions that collect stationary particles in the corners of the angle to result in a naturally smooth transition curve, to cushion the impact of the particles relative to the pipe walls to protect both the particles from breakage and the pipe at the angle from abrasion.

Fines from breakage lower the overall yield of the steelmaking process because their light weight causes them to be entrained in the gases that exit the electric furnaces. The present invention, however, minimizes this problem due to its particular operating conditions.

The known reactivity of DRI with air in the past ruled out the use of air as carrier gas. However, according to one of the particularly preferred embodiments of the present invention, the air is surprisingly effectively used by being contained and continuously recirculated within the transport duct such that under steady state operation the comparatively small amount of oxygen initially in the air circulating in the duct reacts with DRI and through its recirculation the gas remaining in the transport duct soon becomes largely composed of nitrogen, all unexpectedly without any significant effect on the quality of the net amount of transported DRI (in spite of the initial presence of oxygen). This represents a great economic advantage, because it is not necessary to produce or buy separately an inert gas nor use a costly and potentially hazardous reducing gas as a protective carrier gas for transport purposes.

In this specification and in the accompanying drawings, we have shown and described preferred embodiments of our invention and have suggested various alternatives and modifications thereof; but it is to be understood that these are not intended to be exhaustive and that many other chanaes and modifications can be made within the scope of the claims. The suggestions herein are selected and included for purposes of illustration in order that others skilled in the art will more fully understand the invention and the principles thereof and will thus be enabled to modify it in a variety of forms, each as may be best suited to the conditions of a particular use.
Figure 1 shows schematically a steelmaking plant illustrating a preferred embodiment wherein DRI is pneumatically transported from the reduction reactor to one or more points of processing said DRI, which are alternatively and/or sequentially illustrated as being a briquetting press, an electric arc furnace in a meltshop, and a storage bin;
Figure 2 shows a more particularly preferred embodiment of the invention for the pneumatic transport of DRI wherein the carrier gas utilized advantageously is air which is continuously recycled in an endless loop back through the transport duct;
Figure 3 shows a modified preferred embodiment of the invention wherein the carrier gas is the same as the reducing gas used for producina the DRI;
Figure 4 has been deleted;
Figure 5 shows an embodiment of the invention similar to Figure 2, wherein DRI is introduced to the pneumatic transport duct directly from the device which regulates the rate of ore processing in the reduction reactor, and the carrier gas is combusted natural gas; and
Figure 6 shows still another modified preferred embodiment of the invention wherein the carrier gas in the DRI pneumatic transport is natural gas, which, after it is used in said DRI transportation, is shown fed to burners for a heater and a steam reformer (being normally still too dirty for use as a feed to the catalytic reformer).

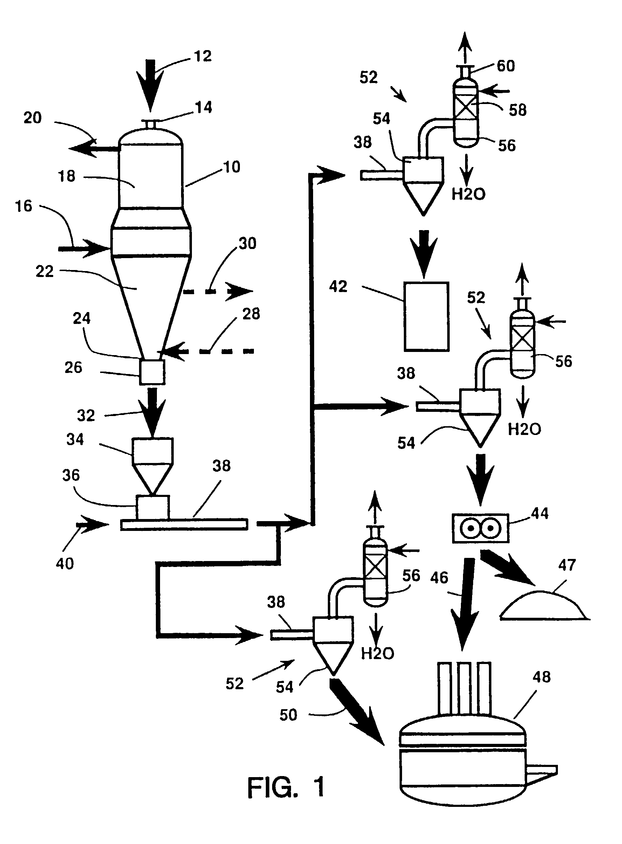

With reference to figure 1, numeral 10 generally designates a direct reduction reactor to which iron ore 12 is fed in form of lumps, pellets or mixtures thereof, through at least one inlet 14. The iron ore descends through the reactor 10 and is countercurrently contacted with a reducing gas at high temperature, normally in the range of 850 to 950°C, which reducing gas is introduced to the reactor at point 16 located in the lower part of the reduction zone 18, and is removed from the reactor at point 20 located in the upper part of said reduction zone, in a manner already known in the art.

At the lower part of reactor 10 there is a conical section 22 which converges to at least one outlet 24 through which the already reduced ore or DRI is discharged. In many plants this lower zone 22 is used as cooling zone for DRI, in order to cool it down to ambient temperature for handling without reoxidation problems when in contact with the atmosphere. In order to cool down DRI, normally a cooling gas stream is circulated countercurrently to the DRI, which gas is introduced at the lower part thereof, as indicated by numeral 28 and is removed hot at the upper part thereof as indicated by numeral 30. Both the reducing gas and the cooling gas are recycled to the reactor as it is well known in the art. In the present invention it is desired to discharge the DRI at high temperature, so the cooling gas loop is not used and DRI is discharged hot.

DRI is discharged from the reduction reactor at a rate regulated by a device 26 which may be a rotary or star valve, for example as described in U.S. patents Nos. 4,427,135 and 4,427,136, or may be other devices of the type described in U.S. patents Nos. 3,375,099; 2,670,946; 4,129,289 and 4,032,120.

DRI 32 is passed to a discharge accumulation bin 34 wherefrom it is introduced at a regulated rate into duct 38 by means of a device 36, which may be a rotary valve (also called a star feeder), a screw type feeder, or a vibratory feeder.

A gas stream 40 is caused to circulate through duct 38 to entrain and pneumatically convey the DRI to a remote point illustrated for example as (1) a storage bin or silo 42, (2) a briquetting press 44 (where briquettes 46 of DRI are formed), and/or (3) an electric arc furnace 48. With the advantages already mentioned above, the briquettes 46 from the press 44 may be charged to a metallurgical furnace, here illustrated as an electric arc furnace 48, or to a different type of furnace where metallic iron is melted and refined, such as induction furnaces, basic oxygen furnaces (BOF), melter-gasifiers, etc., or just to a temporary storage pile 47.

In one of the preferred alternatives, the DRI may be transported and directly charged into the electric arc furnace as indicated by arrow 50.

Each one of the illustrated alternatives of Figure 1 is provided with a receiving station 52 for DRI, comprising a receiving bin 54 which may be used to disengage the carrier gas and the solid particles by a simple expansion of the flow area. Disengagement of the particles from the carrier gas is aided by an enlargement of the pipe 38 close to its introduction into the bin 54 (thus reducing the flow velocity).

Carrier gas exits the receiving bin 54 and passes to a cleaning and cooling tower 56, where said gas is contacted with water in a packed bed 58, in a manner known in the art. The gas cleaned and at, or relatively near, ambient temperature exits the tower 56 through outlet 60.

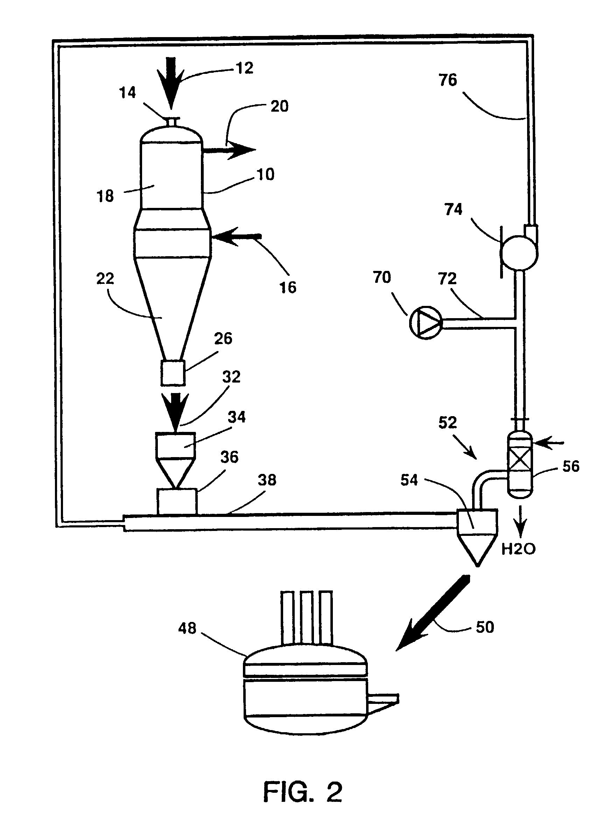

In Figure 2, those elements which are the same have been designated with the same numerals as in Figure 1. Figure 2 shows a particularly preferred embodiment where air is used as the carrier gas which is recycled to great advantage. The oxygen of the initial charge of air as the carrier gas in the transport and recycle ducts (38 & 76) reacts with DRI and, when recycled, the resulting carrier gas composition very soon stabilizes to almost pure nitrogen. This characteristic makes the operation of the pneumatic transport very economical. A stream of air is supplied as an initial charge (and thereafter only as a make-up in small amounts) from a suitable source 70 through duct 72 and is caused to circulate in a closed circuit by compressor 74 through return duct 76 and transport duct 38 in order to convey DRI introduced to duct 38 by means of a feeder or dosifier device 36.

DRI 50, transported from the accumulation/discharge bin 34 to the receiving/separation station 52, is then utilized in the electric arc furnace 48 to be melted and refined in said furnace 48 to produce the desired steel.

Thus, even though the utilization of air would seem to be counterindicated due to DRI reactivity with air, especially at the high temperatures existing with the preferred transport of hot DRI; nevertheless, by recycling the carrier air its relatively small finite oxygen content is soon consumed, resulting in a carrier gas which is almost pure nitrogen. Recycling can be accomplished at relatively high temperatures, even with the scrubbing and partial cooling in tower 56 (needed to protect the compressor 74), thus minimizing yet another source of heat loss. Furthermore, the heat content of the separated still-hot recycle carrier gas is relatively small, because among other things at high temperatures a given mass of gas has a larger volume so less gas is needed to transport a given mass of DRI. Furthermore, the work of the compressor tends to reheat the recycle gas too.

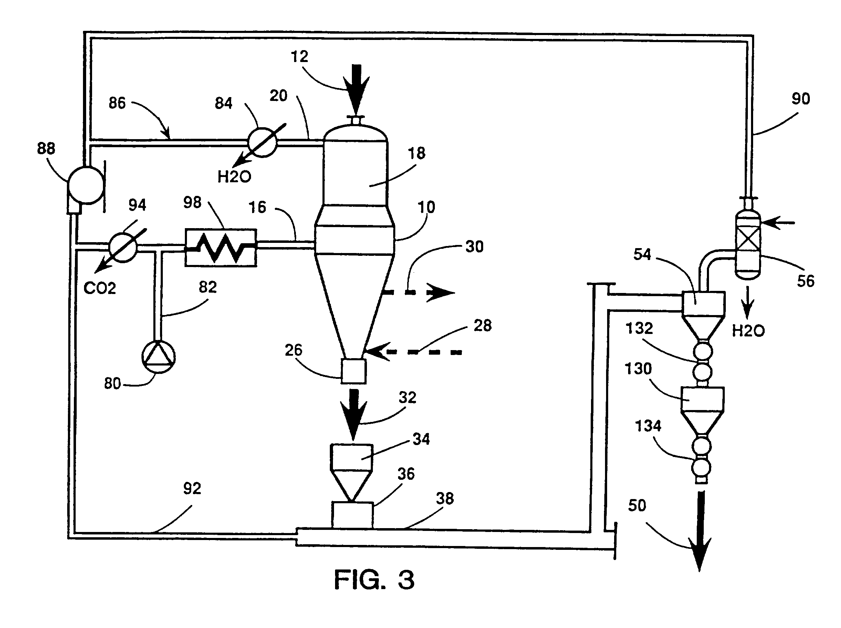

In the alternative embodiment of Figure 3, a reducing gas from a source 80, for example produced by the catalytic reformation of natural gas with steam, is introduced through duct 82 into the reduction circuit 86 comprising the reduction zone 18 of reactor 10, a gas cooler 84, a compressor 88, a CO₂ absorber 94 and a gas heater 98. A portion of the reducing gas leaving compressor 88 is led through duct 92 to duct 38 to be utilized as the carrier gas for DRI introduced from the feeder 36. The reducing gas, after having been separated from DRI at bin 54, is cooled and cleaned in gas cooler 56 and is recycled to compressor 88 via duct 90.

DRI is introduced from bin 34 to duct 38 through a regulating device 36, and, after gas separation in bin 54, passes to lockhopper 130 which is provided with sealing valves 132 and 134 to discharge the DRI from the transport system without contact of the reducing gas with the atmosphere. See U.S. Patent Nos. 3,710,808 and 4,498,498 for such valve systems.

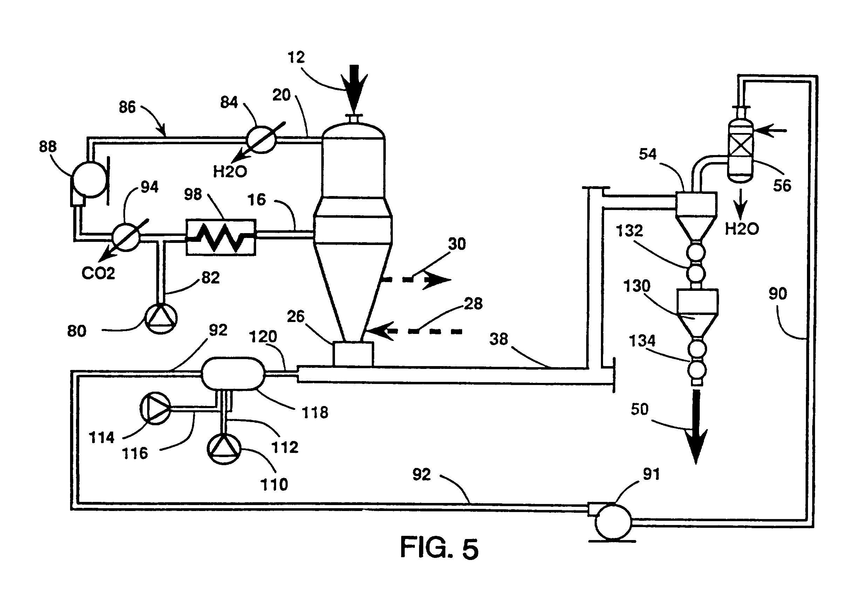

Figure 5 shows another embodiment on the invention wherein the carrier gas is generated through the combustion of natural gas, or of any other suitable fuel, with air. A stream of natural gas from a suitable source 110 is introduced through duct 112 into gas generator 118 where it undergoes combustion with air from a source 114 which is introduced into generator 118 through duct 116.

Combustion in generator 118 consumes the oxygen in the air, forming a carrier gas largely composed of nitrogen and carbon dioxide. This carrier gas is injected via duct 120 into the transport duct 38. Optionally, the carrier gas discharged from scrubber 56 is recycled to the gas generator 118 or directly to the injector duct 120, thus decreasing the consumption of air and make-up fuel.

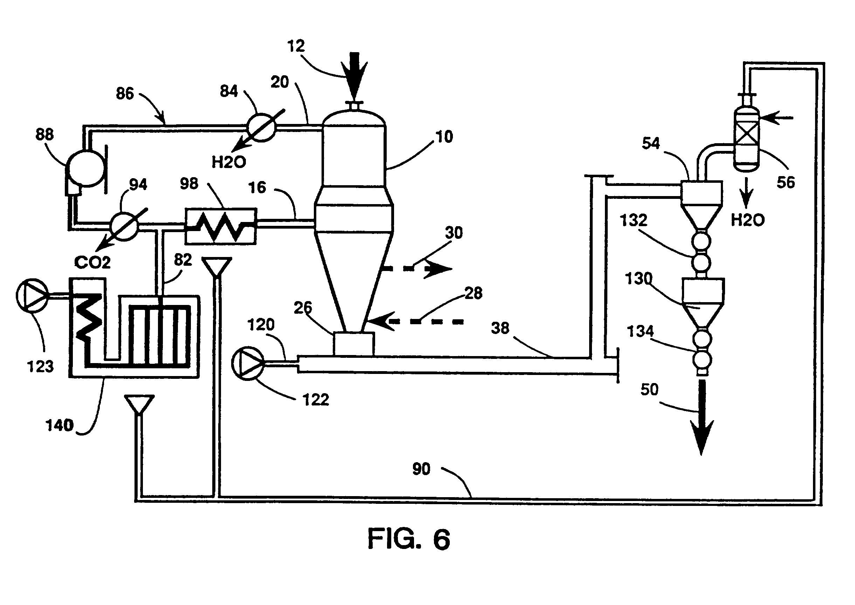

Figure 6 shows another embodiment of the invention wherein the carrier gas utilized for pneumatic transport is natural gas which is fed, from a suitable source 122 available at a high pressure, to duct 38 through supply duct 120. A regulating and dosifying device 26, which removes DRI at a controlled rate from the reduction reactor, feeds DRI directly to duct 38 to be transported therein (thus omitting the intermediate accumulation bin 34 and discharge device 36). This omission of bin 34 and discharge device 36 can be made in the embodiments in the other Figures also. Dosifying device 26 may be a rotary valve or star feeder, or a device of the type of a screw or vibratory, as it has been described here with reference to the previous figures.

Natural gas, once separated from DRI at bin 54, is cleaned in tower 56 and is fed to the burners for the heater 98 and the reformer 140 through return pipe 90. In reformer 140, natural gas is caused to react with steam which are fed to said reformer from a source 123 in a manner known in the art. The reducing gas produced in the reformer 140 is injected into the reducing gas loop 86 through pipe 82 in order to produce the DRI in reactor 10. In accordance with U.S. Patent No. 4,528,030, issued July 9, 1985, the external reformer with its sensitive catalyst tubes can be omitted and the natural gas and steam from source 123 (or possibly even 90) can feed directly into the reduction circuit 86.

### EXAMPLE 1:

32.7 tonnes (36 US tons) of DRI at high temperature were pneumatically transported in a pilot plant from a discharge bin through successive runs of 10 cm (4") diameter pipe joined by T-junctions, which runs were 2 meters horizontally, 6 m vertically, 71 m. horizontally, and 1 m vertically, followed by a horizontal right angle turn and then further runs of 13 m horizontally, 13 m vertically, and then finally into a 11 m vertical pipe of 15 cm (6") diameter.

| Operating conditions were: | |
|---|---|
| Gas | air |
| Pressure at inlet | 1.8 kg/cm² man. |
| Flow rate | 36 kg mol/hr (80lb mol/hr) |
| Temperature | 30 degrees Centigrade |
| Gas Velocity at inlet | 20 meters/second |
| Solid Material | DRI pellets |
| Temperature | 650 degrees C. |
| Rate of transport | 18 tonnes/hr (20 US tons/hr) |

| SCREEN ANALYSIS | | | |
|---|---|---|---|
| Size (metric) | Size (inches) | Initial Weight Fraction (%) | Final Weight Fraction (%) |
| 12mm | 1/2 | 30 | 14 |
| 9mm | 3/8 | 32 | 27 |
| 6mm | 1/4 | 18 | 27 |
| 3mm | 1/8 | 13 | 23 |
| <3mm | <1/8 | 7 | 9 |

The following data were taken at the outlet point:

| | |
|---|---|
| Temperature | 550 Degrees Centigrade |
| Pressure Drop | 1.8 Kg/cm² |
| Pressure | Atmospheric |
| Power | 4.5 Kilowatts/tonne (5KW/US ton) |
| Solids/Gas ratio (mass) | 19 |

### EXAMPLE 2:

The experiment of Example 1 was repeated, but with the 32.7 tonnes (36 US tons) of DRI being instead at ambient temperature.

| Operating conditions were: | |
|---|---|
| Gas | air |
| Pressure at inlet | 1.97kg/cm² gauge |
| Flow rate | 75 kg mol/hr (165 lb mol/hr) |
| Temperature | 30 degrees Centigrade |
| Gas Velocity at inlet | 20 m/s |
| Solid Material | DRI pellets |
| Temperature | 35 degrees Centigrade |
| Rate of transport | 18 tonnes/hr (20 US tons/hr) |

| SCREEN ANALYSIS | | | |
|---|---|---|---|
| Size (metric) | Size (inches) (%) | Initial Weight Fraction (%) | Final Weight Fraction |
| 12mm | 1/2 | 61 | 25 |
| 9mm | 3/8 | 28 | 51 |
| 6mm | 1/4 | 8 | 16 |
| 3mm | 1/8 | 3 | 7 |
| <3mm | <1/8 | 0 | 1 |

The following data were taken at the outlet point:

| | |
|---|---|
| Pressure Drop | 1.8 Kg/cm² |
| Pressure | Atmospheric |
| Power | 9 Kw/tonnes (10 Kw/US ton) |
| Solids/Gas ratio (mass) | 15 |

If "fines" are defined as being anything less than 3 mm (1/8"), then the pneumatic transport of friable DRI increased the fines content surprisingly by about only 1 or 2%.

Note that because of the greater weight of the air under ambient temperature conditions in Examine 2 as compared to Example 1, twice as much power was needed to transport cold DRI than was needed for the same amount of hot DRI.

The experimental apparatus can empty about 36 tons of DRI in about 45 minutes and has transported DRI over 200 meters.

DRI may be introduced into the transport duct with or without an intermediate discharge bin.

As a practical matter, economically and otherwise, the upper limits of the particle size to be transported should be about 7.5 cm (3 inches) and preferably no more than 1/3 the diameter of the transport pipe. Normally the DRI pellets mainly are from greater than 3 mm (1/8") to 9 mm (3/4"), and DRI lumps range up to 25 mm (1") to 38 mm (1½"). The practical length of transport is 200 to 300 meters. Thus typical pneumatic transport in an experimental plant from the reduction reactor to the EAF is less than a minute through a 10 cm (4") to 15 cm (6") progressively increasingly sized pipe. This gives minimal time for heat loss during transport. The energy loses in pneumatic transport of DRI (mainly electric cost for the compressor) are more than made up for in the savings in time, energy, and retained fines.

Relatively lower gas velocities are preferred so as to minimize abrasion and congestion, but with sufficient velocity for efficiency of transport. For example, for a 10 cm (4") pipe 164 meters long, the transport of typical DRI from a moving bed reactor generated a bell curve when the capacity of DRI conveyed was plotted against gas velocity (from about 11 tonnes of DRI/hour at a velocity of 9 meters/second, to about 23 tonnes/hr. at 20 m/s, and back down to 11 tonnes/hr at 35 m/s); thus indicating a preferred range of about 17 to 25 m/s velocity of the carrier gas.

## Claims

1. A method of transporting iron-bearing particles from a departure point to a remote point for storage or further processing, comprising introducing said iron-bearing particles into a closed conduit, causing a stream of gas to transport pneumatically the iron-bearing particles through the closed conduit to said remote point, and separating said gas from said particles at said remote point, characterised in that at least 80% of the iron-bearing particles are of a size greater than 0.5 cm and at least 50% are of a size greater than 1.0 cm, the iron-bearing particles being introduced into said conduit when they are hot, the gas stream being substantially non-oxidising.

2. A method as claimed in claim 1 further characterised in that the iron-bearing particles are introduced into the closed conduit at a temperature of at least 400°C.

3. A method of transporting iron-bearing particles such as iron ore or sponge iron from a departure point to a remote point for storage or further processing, comprising introducing said iron-bearing particles into a closed conduit, causing a stream of gas to transport pneumatically the iron-bearing particles through the closed conduit to said remote point, and separating said gas from said particles at said remote point, characterised in that at least 80% of the iron-bearing particles are of a size greater than 0.5 cm and at least 50% are of a size greater than 1.0 cm, the iron-bearing particles being introduced into said conduit at a temperature above 400°C.

4. A method as claimed in claim 2 or claim 3, further characterised by the iron-bearing particles being introduced into the conduit at a temperature between 450°C and 750°C.

5. A method as claimed in any of the preceding claims, further characterised by circulating said gas through said conduit at a velocity between 9 and 35 meters/sec. and/or at a pressure between 1 and 5 kg/cm² gage.

6. A method as claimed in any of the preceding claims, further characterised by circulating said gas through said conduit at a ratio of mass of particles to mass of gas in the range of 7 to 25.

7. A method as claimed in any of the preceding claims, further characterised by causing the gas and iron-bearing particles being transported thereby to pass upwardly through a portion of said closed conduit which is at an elevation greater than said departure point.

8. A method as claimed in any of the preceding claims, further characterised by recycling said gas to said departure point.

9. A method as claimed in any of the preceding claims, further characterised in that in said gas originated as air, or is natural gas, or nitrogen, or spent reducing gas, or is produced by the combustion of a fuel with air.

10. A method as claimed in claim 9 further characterised in that gas originated as air and is circulated in a closed circuit, oxygen in the gas having been consumed by limited oxidation of previously transported iron bearing particles.

11. A method as claimed in any preceding claim further characterised in that said particles are sponge iron particles (hereafter called DRI) which are produced by the direct reduction of particulate iron ore in a reduction reactor, and said departure point for the DRI is at the discharge of said reactor.

12. A method as claimed in claim 11, further characterised by melting and transforming to steel said DRI still hot from the reactor in a furnace at said remote point.

13. A method as claimed in claim 11, further characterised by discharging said DRI from said reduction reactor at a temperature above 600°C and transforming the DRI to briquettes at said remote point.

14. A method as claimed in claim 11, further characterised by diverting the DRI into a storage site at said remote point.

15. A method as claimed in any of claims 11 to 14, further characterised in that said reactor is in a moving bed reduction reactor or a fixed bed reduction reactor.

16. A method as claimed in any of claims 11 to 15, further characterised by introducing said DRI from said reactor to said conduit through a pressure lock which permits discharging the reduction reactor without contact of atmospheric air with the inner part of said reactor.

17. A method as claimed in any of claim 11 to 15, further characterised by introducing at a regulated rate said DRI into said conduit directly from said reduction reactor.

18. A method as claimed in any of the preceding claims, further characterised in that at least a portion of said gas, after separation at said remote point, is cooled, cleaned, and recycled back to said departure point.

19. A method as claimed in any of claims 2 or 11 to 18 when dependent from claim 2 characterised in that the iron-bearing particles are introduced from the reactor without being cooled.

20. A method as claimed in any preceding claim further characterised by preheating the gas stream before transporting the iron-bearing particles.

21. Iron processing plant comprising a transport system for hot iron-bearing particles, said system including a closed conduit (38), introducing means (34) for introducing said particles into the conduit at a departure point, means (88) for passing a gas stream through the conduit with flow characteristics such as to transport pneumatically the iron-bearing particles through the conduit from the departure point to a remote point, and means (52) for delivering said particles from the conduit at the remote point, the plant further comprising a direct reduction reactor (10) adapted to provide hot iron-bearing particles, 80% of which particles are of a size greater than 0.5 cm and at least 50% of which are of a size greater than 1.0 cm, said reactor being arranged to deliver the particles uncooled to the introducing means, the means for passing a gas stream being arranged to utilise a substantially non oxidising gas as said gas stream, and apparatus for receiving the iron bearing particles at the remote point for storage or further processing.

22. Plant as claimed in claim 21 further characterised in that the reactor (10) is adapted to provide said particles at a temperature of above 400°C.

23. Plant as claimed in claim 21 or 22 further characterised by means (118) for preheating the gas stream.

24. Plant as claimed in any of claims 21 to 23 further characterised by means for circulating the gas stream in a closed loop.

25. Plant as claimed in any of claims 21 to 24 further characterised in that the reactor is
a vertical shaft moving bed reduction reactor (10) with a reduction zone (18) and a discharge zone (22);
the closed conduit being a particulate solids pneumatic pipe conveyor (38), the apparatus at the remote point being a particle handling bin (54) laterally remote from and non-aligned vertically with respect to said reactor, the means (74,76 or 88,92 or 96,92 or 91,92) for passing a gas stream being arranged for supplying the gas at a pressure and velocity sufficient to lift upwardly and pneumatically transport said particles between said reactor and said bin.

26. Plant as claimed in Claim 25, further characterised by:
a charge inlet (14) to said reduction zone;
a discharge outlet (24) from said discharge zone;
means (26) for controlling discharge of particles (32) from said discharge zone through said outlet;
means (16) for feeding said hot reducing gas at the bottom of said upper reduction zone, and means (20) for removing the spent stream of hot reducing gas at the top portion of the reduction reactor;
said pneumatic pipe conveyor (38) extending from communication with said discharge outlet to said particle handling bin, said particle handling bin comprising at least one disengaging bin (54) for disengaging pneumatically transported particles from said gas;
said gas supply means feeding into said pipe conveyor adjacent said discharge outlet.

27. Plant as claimed in Claim 26, further characterised by a pressure lock bin (130) in series with the disengaging bin (54) and arranged to communicate alternately with said disengaging bin and the outer atmosphere by means of gas sealing valves (132,134), both bins being non-aligned vertically with the reactor (10) with a substantial vertical overlap.

28. Plant as claimed in Claim 26 or 27, further characterised by:
a return duct (90,92) connecting with said disengaging bin (54) to receive and recycle disengaged gas back in a closed pneumatic loop to said gas supply means (88);
a cleaning and cooling unit (56) in said return duct for cleaning and cooling the disengaged gas;
the gas supply means (91) including a compressor positioned after the cleaning and cooling unit so as to receive and move along cleaned and cooled recycled gas; and
a device (118) at least effective for the heating of gas furnished to said gas supply including at least gas recycled by said duct.

29. Plant as claimed in Claim 28, further characterised by a sourcing device (110,118) for supplying make-up gas to the pneumatic loop.

30. Plant as claimed in Claim 29, further characterised in that said gas feeding means (16) and said gas removing means (20) are connected externally in a reducing gas conduit loop (16,20,86), which reducing loop includes a cleaner/cooler (84), a compressor (88), and a device (98) effective for heating gas in said reducing gas loop. said pneumatic loop and said reducing loop being interconnected so as to share the compressor (88) in common, whereby a portion of the reducing gas from the reducing loop serves as the make-up gas to the pneumatic loop.

31. Plant as claimed in Claim 26, further characterised in that said gas feeding means (16) and said gas removing means (20) are connected in an external reducing gas conduit loop (16,20,86), which loop includes a cleaner/cooler (84), a compressor (88), and a device (98) effective for heating gas in said reducing gas loop, said pneumatic conveying pipe and said recycle duct forming a separate loop for its gas and each loop has an independent compressor (88,91) and device (98,118) effective for heating gas in such respective pneumatic gas loop.

32. Plant as claimed in Claim 30 or 31, further characterised by a carbon dioxide removal unit (94) in said reducing loop downstream of said compressor (88), and wherein said device (98,118) effective for heating in such respective loops is a heater.

## Patentansprüche

1. Verfahren zum Transportieren eisenhaltiger Teilchen bzw. Eisen tragender Teilchen von einem Abtransportpunkt bzw. Ausgangspunkt zu einem entfernten Punkt zum Speichern oder Weiterverarbeiten, das das Einführen der eisenhaltigen Teilchen in eine geschlossene Leitung bzw. ein geschlossenes Rohr, das Veranlassen eines Gasstromes, um pneumatisch die eisenhaltigen Teilchen durch die geschlossene Leitung zu dem entfernten Punkt zu transportieren, und das Trennen des Gases von den Teilchen bei dem entfernten Punkt umfaßt und dadurch **gekennzeichnet** ist, daß wenigstens 80 % der eisenhaltigen Teilchen eine Größe von größer als 0,5 cm und wenigstens 50 % eine Größe von größer als 1,0 cm haben, wobei die eisenhaltigen Teilchen in die Leitung eingeführt werden, wenn sie heiß sind und der Gasstrom im wesentlichen nichtoxidierend ist.

2. Verfahren nach Anspruch 1, das weiter dadurch **gekennzeichnet** ist, daß die eisenhaltigen Teilchen in die geschlossene Leitung bei einer Temperatur von wenigstens 400 °C eingeführt werden.

3. Verfahren zum Transportieren eisenhaltiger Teilchen bzw. Eisen tragender Teilchen, wie z.B. Eisenerz oder Schwammeisen, von einem Abtransport- bzw. Ausgangspunkt zu einem entfernten Punkt zum Speichern und Weiterverarbeiten, das das Einführen der eisenhaltigen Teilchen in eine geschlossene Leitung, das Veranlassen eines Gasstromes, um pneumatisch die eisenhaltigen Teilchen durch die geschlossene Leitung zu dem entfernten Punkt zu transportieren, und das Trennen des Gases von den Teilchen bei dem entfernten Punkt umfaßt und dadurch **gekennzeichnet** ist, daß wenigstens 80 % der eisenhaltigen Teilchen eine Größe von größer als 0,5 cm und wenigstens 50 % eine Größe von größer als 1,0 cm haben, wobei die eisenhaltigen Teilchen in die Leitung bei einer Temperatur oberhalb 400 °C eingeführt werden.

4. Verfahren nach Anspruch 2 oder Anspruch 3, das weiter durch eisenhaltige Teilchen **gekennzeichnet** ist, die in die Leitung bei einer Temperatur zwischen 450 °C und 750 °C eingeführt werden.

5. Verfahren nach irgendeinem der vorhergehenden Ansprüche, das weiter durch das Zirkulieren des Gases durch die Leitung bei einer Geschwindigkeit zwischen 9 und 35 m/s und/oder bei einem Druck zwischen 1 und 5 kg/cm² **gekennzeichnet** ist.

6. Verfahren, wie in irgendeinem der vorhergehenden Ansprüche beansprucht, das weiter durch das Zirkulieren des Gases durch die Leitung bei einem Verhältnis der Masse der Teilchen zur Masse des Gases in dem Bereich von 7 bis 25 **gekennzeichnet** ist.

7. Verfahren, wie in irgendeinem der vorhergehenden Ansprüche beansprucht, weiter dadurch **gekennzeichnet**, daß das Gas und die eisenhaltigen Teilchen, die dadurch transportiert werden, veranlaßt werden, nach oben durch einen Teil der geschlossenen Leitung zu gelangen, die sich bei einer Höhe befindet, die größer bzw. höher ist als der Ausgangspunkt.

8. Verfahren, wie in irgendeinem der vorhergehenden Ansprüche beansprucht, weiter **gekennzeichnet** durch das Recyceln bzw. Rückführen des Gases zu dem Ausgangspunkt.

9. Verfahren, wie in irgendeinem der vorhergehenden Ansprüche beansprucht, weiter dadurch **gekennzeichnet**, daß das Gas ursprünglich Luft oder Naturgas bzw. Erdgas oder Stickstoff oder verbrauchtes Reduziergas ist oder daß es durch die Verbrennung eines Brennstoffes bzw. Kraftstoffes mit Luft erzeugt wird.

10. Verfahren, wie es im Anspruch 9 beansprucht ist, weiter dadurch **gekennzeichnet**, daß das Gas ursprünglich Luft ist und in einem geschlossenen Kreislauf zirkuliert wird, wobei der Sauerstoff in dem Gas durch begrenzte Oxidation von zuvor transportierten eisenhaltigen Teilchen verbraucht wird.

11. Verfahren, wie in irgendeinem der vorhergehenden Ansprüche beansprucht, weiter dadurch **gekennzeichnet**, daß die Teilchen Schwammeisen-Teilchen (im folgenden DRI genannt) sind, die durch Direktreduktion von korpuskulärem Eisenerz in einem Reduktionsreaktor erzeugt werden und der Ausgangspunkt für das DRI sich bei dem Auslaß des Reaktors befindet.

12. Verfahren, wie im Anspruch 11 beansprucht, weiter dadurch **gekennzeichnet**, daß das von dem Reaktor stammende noch heiße DRI in einem Schmelzofen bei dem entfernten Punkt geschmolzen und transformiert wird.

13. Verfahren, wie im Anspruch 11 beansprucht, weiter dadurch **gekennzeichnet**, daß das DRI von dem Reduktionsreaktor bei einer Temperatur oberhalb 600 °C ausgegeben wird und das DRI zu Briketts bei dem entfernten Punkt transformiert wird.

14. Verfahren, wie im Anspruch 11 beansprucht, weiter dadurch **gekennzeichnet**, daß das DRI in einen Speicherplatz bei dem entfernten Punkt umgeleitet wird.

15. Verfahren, wie in irgendeinem der Ansprüche 11 bis 14 beansprucht, weiter dadurch **gekennzeichnet**, daß der Reaktor in einem Fließbett-Reduktionsreaktor oder einem Festbett-Reduktionsreaktor ist.

16. Verfahren, wie in irgendeinem der Ansprüche 11 bis 15 beansprucht, weiter dadurch **gekennzeichnet**, daß das DRI von dem Reaktor in die Leitung durch eine Drucksperre eingeführt wird, die das Auslassen bzw. Entladen des Reduktionsreaktors ohne Kontakt mit atmosphärischer Luft bzw. Umgebungsluft mit dem inneren Teil des Reaktors erlaubt.

17. Verfahren, wie in irgendeinem der Ansprüche 11 bis 15 beansprucht, weiter dadurch **gekennzeichnet**, daß das DRI mit einer regulierten Rate in die Leitung direkt von dem Reduktionsreaktor eingeführt wird.

18. Verfahren, wie in irgendeinem der vorhergehenden Ansprüche beansprucht, weiter dadurch **gekennzeichnet**, daß wenigstens ein Teil des Gases nach der Trennung bei dem entfernten Punkt gekühlt, gereinigt und zu dem Ausgangspunkt zurückgeführt wird.

19. Verfahren, wie in irgendeinem der Ansprüche 2 oder 11 bis 18 beansprucht, wenn sie von Anspruch 2 abhängen, dadurch **gekennzeichnet**, daß die eisenhaltigen Teilchen von dem Reaktor, ohne gekühlt zu werden, eingeführt werden.

20. Verfahren, wie in irgendeinem vorhergehenden Anspruch beansprucht, weiter durch das Vorheizen des Gasstromes vor dem Transport der eisenhaltigen Teilchen **gekennzeichnet**.

21. Eisenverarbeitungsanlage bzw. -fabrik, die ein Transportsystem für heiße eisenhaltige Teilchen umfaßt, wobei das System eine geschlossene Leitung (38), eine Einführeinrichtung (34) zum Einführen der Teilchen in die Leitung bei einem Ausgangspunkt, eine Einrichtung (88) zum Leiten eines Gasstromes durch die Leitung mit Fließcharakteristiken, wie z.B. den pneumatischen Transport der eisenhaltigen Teilchen durch die Leitung von dem Ausgangspunkt zu dem entfernten Punkt, und eine Einrichtung (52) zum Abgeben der Teilchen von der Leitung bei dem entfernten Punkt, umfaßt, wobei die Anlage bzw. Fabrik weiter einen direkten Reduktionsreaktor (10) umfaßt, der daran angepaßt ist, heiße eisenhaltige Teilchen bereitzustellen, von denen 80 % eine Größe aufweisen, die größer ist als 0,5 cm, und wenigstens 50 % davon eine Größe aufweisen, die größer ist als 1,0 cm, wobei der Reaktor angeordnet ist, um die Teilchen ungekühlt zu der Einführeinrichtung zu liefern, wobei die Einrichtung zum Leiten eines Gasstromes angeordnet ist, um ein im wesentlichen nichtoxidierendes Gas als den Gasstrom zu verwenden, und einen Apparat zum Aufnehmen der eisenhaltigen Teilchen bei dem entfernten Punkt zum Speichern oder Weiterverarbeiten umfaßt.

22. Anlage bzw. Fabrik, wie im Anspruch 21 beansprucht, weiter dadurch **gekennzeichnet**, daß der Reaktor (10) angepaßt ist, um die Teilchen bei einer Temperatur von oberhalb 400 °C bereitzustellen.

23. Anlage bzw. Fabrik, wie im Anspruch 21 oder 22 beansprucht, weiter **gekennzeichnet** durch die Einrichtung (118) zum Vorheizen des Gasstromes.

24. Anlage bzw. Fabrik, wie in irgendeinem der Ansprüche 21 bis 23 beansprucht, weiter **gekennzeichnet** durch eine Einrichtung zum Zirkulieren des Gasstromes in einer geschlossenen Schleife.

25. Anlage bzw. Fabrik, wie in irgendeinem der Ansprüche 21 bis 24 beansprucht, weiter dadurch **gekennzeichnet**, daß der Reaktor
ein Vertikalschacht-Fließbett-Reduktionsreaktor (10) mit einem Reduktionsbereich (18) und einem Entladebereich bzw. Auslaßbereich (22) ist;
wobei die geschlossene Leitung eine pneumatische Röhren-Fördereinrichtung (38) für korpuskuläre Festkörper ist, der Apparat bei dem entfernten Punkt ein Teilchen-Handhabungsbunker (54) ist, der seitlich von dem Reaktor entfernt ist und vertikal bezüglich des Reaktors nicht ausgerichtet ist, die Einrichtung (74, 76 oder 88, 92 oder 96, 92 oder 91, 92) zum Leiten eines Gasstromes zum Zuführen des Gases bei einem Druck und einer Geschwindigkeit angeordnet ist, die bzw. der ausreichend ist, um die Teilchen nach oben anzuheben und sie pneumatisch zwischen dem Reaktor und dem Bunker zu transportieren.

26. Anlage bzw. Fabrik, wie im Anspruch 25 beansprucht, weiter **gekennzeichnet** durch:
einen Beschickungseinlaß (14) zu dem Reduktionsbereich;
einen Entladungsauslaß (24) von dem Entladungsbereich bzw. Auslaßbereich;
eine Einrichtung (26) zum Steuern des Auslasses bzw. Entladens von Teilchen (32) von dem Entladebereich durch den Auslaß;
eine Einrichtung (16) zum Zuführen des heißen Reduzierungsgases am Boden des oberen Reduktionsbereiches und eine Einrichtung (20) zum Entfernen des verbrauchten Stroms von heißem Reduziergas an dem obersten Abschnitt des Reduktionsreaktors;
wobei sich die pneumatische Röhren-Fördereinrichtung (38) von einer Verbindung mit dem Entladeauslaß zu dem Teilchen-Handhabungsbunker erstreckt, und wobei der Teilchen-Handhabungsbunker wenigstens einen Trennbunker bzw. Separierbunker (54) zum Trennen pneumatisch transportierter Teilchen von dem Gas aufweist;
wobei die Gaszufuhreinrichtung in die Röhren-Fördereinrichtung benachbart zu dem Entladeauslaß zuführt.

27. Anlage bzw. Fabrik, wie im Anspruch 26 beansprucht, weiter **gekennzeichnet** durch einen Drucksperrbunker (130), der in Reihe mit dem Trennbunker (54) ist und angeordnet ist, um alternierend mit dem Trennbunker und der äußeren Umgebung bzw. Luft mittels Gas Dichtventilen (132, 134) in Verbindung zu treten, wobei beide Bunker vertikal nicht-ausgerichtet mit dem Reaktor (10) mit einem wesentlichen vertikalen Überlapp sind.

28. Anlage bzw. Fabrik, wie im Anspruch 26 oder 27 beansprucht, weiter **gekennzeichnet** durch:
eine Rückführleitung bzw. Rückführführung (90, 92), die mit dem Trennbunker (54) verbunden ist, um getrenntes bzw. separiertes Gas zurück in eine geschlossenen pneumatische Schleife zu der Gaszuführeinrichtung (88) zurückzuführen;
eine Reinigungs- und Kühleinheit (56) in der Rückführleitung, um das separierte bzw. getrennte Gas zu reinigen und zu kühlen;
wobei die Gaszuführeinrichtung (91) einen Kompressor enthält, der nach der Reinigungs- und Kühleinheit angeordnet ist, um so gereinigtes und gekühltes rückgeführtes Gas aufzunehmen und entlang zu bewegen; und
eine Vorrichtung (118), die wenigstens wirksam ist, um das Gas zu erhitzen, das zu der Gaszuführeinrichtung geliefert wird, und zwar einschließlich wenigstens des Gases, das durch die Führung bzw. Leitung zurückgeführt wird.

29. Anlage bzw. Fabrik, wie im Anspruch 28 beansprucht, weiter **gekennzeichnet** durch eine Quellenvorrichtung (110, 118), um Auffrischungs- bzw. Ausgleichsgas bzw. Gas zur Deckung von Verlusten zu der pneumatischen Schleife zuzuführen.

30. Anlage bzw. Fabrik, wie im Anspruch 29 beansprucht, weiter dadurch **gekennzeichnet**, daß die Gaszuführeinrichtung (16) und die Gasentfernungseinrichtung (20) extern in einer Reduziergasleitungsschleife (16, 20, 86) verbunden sind, wobei die Reduzierschleife einen Reiniger/Kühler (84), einen Kompressor (88) und eine Vorrichtung (98) enthält, die wirksam ist, um Gas in der Reduziergasschleife zu erhitzen, wobei die pneumatische Schleife und die Reduzierschleife so verbunden sind, um sich gemeinsam den Kompressor (88) zu teilen, wodurch ein Teil des Reduziergases von der Reduzierschleife als das Auffrischgas bzw. Ausgleichsgas zu der pneumatischen Schleife dient.

31. Anlage bzw. Fabrik, wie im Anspruch 26 beansprucht, weiter dadurch **gekennzeichnet**, daß die Gaszuführeinrichtung (16) und die Gasentfernungseinrichtung (20) in einer externen Reduziergasleitungsschleife (16, 20, 86) verbunden sind, wobei die Schleife einen Reiniger/Kühler (84), einen Kompressor (88) und eine Vorrichtung (98), die zum Heizen des Gases in der Reduziergasschleife wirkt, enthält, wobei die pneumatische Förderröhre und die Rückführleitung bzw. Rückführführung, die eine separate Schleife für ihr Gas ausbildet, und jede Schleife einen unabhängigen Kompressor (88, 91) und eine Vorrichtung (98, 118) ausbildet, die wirksam ist, um Gas in einer derartigen jeweiligen pneumatischen Gasschleife zu erhitzen.

32. Anlage bzw. Fabrik, wie im Anspruch 30 oder 31 beansprucht, weiter **gekennzeichnet** durch eine Kohlendioxid-Entfernungseinheit (94) in der Reduzierschleife stromabwärts des Kompressors (88), und bei welcher die Vorrichtung (98, 118), die zum Heizen in derartigen jeweiligen Schleifen wirkt, eine Heizeinrichtung ist.

## Revendications

1. Procédé de transport de particules contenant du fer, d'un point de départ à un point distant pour stockage ou autre traitement, qui comprend l'introduction desdites particules contenant du fer dans un conduit fermé, la création d'un courant de gaz pour transporter pneumatiquement les particules contenant du fer dans le conduit fermé jusqu'audit point distant, et la séparation dudit gaz desdites particules audit point distant, caractérisé en ce qu'au moins 80% des particules contenant du fer ont une dimension supérieure à 0,5 cm et au moins 50% ont une dimension supérieure à 1,0 cm, les particules contenant du fer étant introduites dans ledit conduit lorsqu'elles sont chaudes, le courant de gaz étant sensiblement non oxydant.

2. Procédé suivant la revendication 1, caractérisé en outre en ce que les particules contenant du fer sont introduites dans le conduit fermé à une température d'au moins 400°C.

3. Procédé de transport de particules contenant du fer, telles que du minerai de fer ou de l'éponge de fer, d'un point de départ à un point distant pour stockage ou autre traitement, qui comprend l'introduction desdites particules contenant du fer dans un conduit fermé, la création d'un courant de gaz pour transporter pneumatiquement les particules contenant du fer dans le conduit fermé jusqu'audit point distant, et la séparation dudit gaz desdites particules audit point distant, caractérisé en ce qu'au moins 80% des particules contenant du fer ont une dimension supérieure à 0,5 cm et au moins 50% ont une dimension supérieure à 1,0 cm, les particules contenant du fer étant introduites dans ledit conduit à une température supérieure à 400°C.

4. Procédé suivant la revendication 2 ou la revendication 3, caractérisé en outre en ce que les particules contenant du fer sont introduites dans le conduit à une température comprise entre 450°C et 750°C.

5. Procédé suivant une quelconque des revendications précédentes, caractérisé en outre en ce qu'on fait circuler ledit gaz dans ledit conduit à une vitesse comprise entre 9 et 35 m/s et/ou sous une pression comprise entre 1 x 10⁵ et 5 x 10⁵ Pa eff.

6. Procédé suivant une quelconque des revendications précédentes, caractérisé en outre en ce qu'on fait circuler ledit gaz dans ledit conduit à un rapport de la masse de particules à la masse de gaz compris entre 7 et 25.

7. Procédé suivant une quelconque des revendications précédentes, caractérisé en outre en ce qu'on fait passer le gaz et les particules contenant du fer transportées par le gaz vers le haut dans une partie du dit conduit fermé qui est à une élévation plus haute que ledit point de départ.

8. Procédé suivant une quelconque des revendications précédentes, caractérisé en outre en ce qu'on recycle ledit gaz audit point de départ.

9. Procédé suivant une quelconque des revendications précédentes, caractérisé en outre en ce que ledit gaz est à l'origine de l'air, ou du gaz naturel, ou de l'azote,ou un gaz réducteur usé, ou il est produit par la combustion d'un combustible avec de l'air.

10. Procédé suivant la revendication 9, caractérisé en outre en ce que le gaz est initialement de l'air et il est mis en circulation dans un circuit fermé, l'oxygène du gaz ayant été consommé par oxydation limitée des particules contenant du fer précédemment transportées.

11. Procédé suivant une quelconque des revendications précédentes, caractérisé en outre en ce que les particules sont des particules d'éponge de fer (appelées FRD dans ce qui suit) qui sont produites par la réduction directe de minerai de fer en particules dans un réacteur de réduction, et ledit point de départ du FRD est à la sortie dudit réacteur.

12. Procédé suivant la revendication 11, caractérisé en outre par la fusion et la transformation en acier dudit FRD encore chaud venant du réacteur dans un four situé audit point distant.

13. Procédé suivant la revendication 11, caractérisé en outre par l'extraction dudit FRD dudit réacteur de réduction à une température supérieure à 600°C et la transformation du FRD en briquettes audit point distant.

14. Procédé suivant la revendication 11, caractérisé en outre par la dérivation du FRD vers un site de stockage audit point distant.

15. Procédé suivant une quelconque des revendications 11 à 14, caractérisé en outre en ce que ledit réacteur est un réacteur de réduction à lit mobile ou un réacteur de réduction à lit fixe.

16. Procédé suivant une quelconque des revendications 11 à 15, caractérisé en outre par l'introduction dudit FRD venant dudit réacteur dans le dit conduit par l'intermédiaire d'un sas de pression qui permet l'extraction du réacteur de réduction sans contact de l'air atmosphérique avec la partie intérieure dudit réacteur.

17. Procédé suivant une quelconque des revendications 11 à 15, caractérisé en outre par l'introduction à un débit réglé dudit FRD dans ledit conduit directement à partir dudit réacteur de réduction.

18. Procédé suivant une quelconque des revendications précédentes, caractérisé en outre en ce qu'au moins une partie dudit gaz, après séparation audit point distant, est refroidie, nettoyée et recyclée en retour audit point de départ.

19. Procédé suivant une quelconque des revendications 2 ou 11 à 18 lorsqu'elles dépendent de la revendication 2, caractérisé en ce que les particules contenant du fer sont introduites à partir du réacteur sans être refroidies.

20. Procédé suivant une quelconque des revendications précédentes, caractérisé en outre par le préchauffage du courant de gaz avant de transporter les particules contenant du fer.

21. Installation de traitement du fer comprenant un système de transport de particules chaudes contenant du fer, ledit système incluant un conduit fermé (38), des moyens d'introduction (34) pour introduire lesdites particules dans le conduit à un point de départ, des moyens (88) de passage d'un courant de gaz dans le conduit avec des caractéristiques d'écoulement permettant de transporter pneumatiquement les particules contenant du fer dans le conduit à partir du point de départ jusqu'à un point distant, et des moyens (52) pour extraire lesdites particules du conduit au point distant,l'installation comprenant en outre un réacteur de réduction directe (10) prévu pour fournir des particules chaudes contenant du fer, 80% de ces particules ayant une dimension supérieure à 0,5 cm et au moins 50% de ces particules ayant une dimension supérieure à 1,0 cm, ledit réacteur étant agencé pour fournir les particules non refroidies aux moyens d'introduction, les moyens de passage d'un courant de gaz étant agencés pour utiliser un gaz sensiblement non oxydant comme dit courant de gaz, et un appareil de réception des particules contenant du fer au point distant pour stockage ou autre traitement.

22. Installation suivant la revendication 21, caractérisée en outre en ce que le réacteur (10) est prévu pour fournir lesdites particules à une température supérieure à 400°C.

23. Installation suivant la revendication 21 ou 22, caractérisée en outre par des moyens (118) de préchauffage du courant de gaz.

24. Installation suivant une quelconque des revendications 21 à 23, caractérisée en outre par des moyens de mise en circulation du courant de gaz dans une boucle fermée.

25. Installation suivant une quelconque des revendications 21 à 24, caractérisée en outre en ce que le réacteur est un réacteur de réduction à lit mobile à chambre verticale (10) comportant une zone de réduction (18) et une zone d'extraction (22), le conduit fermé étant un convoyeur à tube pneumatique pour solides en particules (38), l'appareil situé au point distant étant une trémie de manutention de particules (54) espacée latéralement dudit réacteur et non alignée verticalement par rapport à celui-ci, les moyens (74,76 ou 88,92 ou 96,92 ou 91,92) de passage d'un courant de gaz étant agencés pour fournir le gaz à une pression et une vitesse suffisantes pour déplacer vers le haut et transporter pneumatiquement lesdites particules entre ledit réacteur et ladite trémie.

26. Installation suivant la revendication 25, caractérisée en outre par :
une entrée de charge (14) dans ladite zone de réduction ;
une sortie d'extraction (24) de ladite zone d'extraction ;
des moyens (26) de réglage de l'extraction de particules (32) à partir de ladite zone d'extraction, à travers ladite sortie ;
des moyens (16) d'amenée dudit gaz réducteur chaud à la base de ladite zone de réduction supérieure et des moyens (20) d'évacuation du courant de gaz réducteur chaud usé à la partie supérieure du réacteur de réduction ;
ledit convoyeur à tube pneumatique (38) s'étendant d'une communication avec ladite sortie d'extraction à ladite trémie de manutention de particules, ladite trémie de manutention de particules comprenant au moins une trémie de séparation (54) pour séparer les particules transportées pneumatiquement dudit gaz ; et
lesdits moyens d'amenée de gaz introduisant le gaz dans ledit convoyeur à tube près de ladite sortie d'extraction.

27. Installation suivant la revendication 26, caractérisée en outre par une trémie de sas de pression (130) en série avec la trémie de séparation (54) et disposée de manière à communiquer alternativement avec la dite trémie de séparation et avec l'atmosphère extérieure au moyen de vannes d'isolement de gaz (132,134), les deux trémies étant non alignées verticalement avec le réacteur (10), avec un chevauchement vertical substantiel.

28. Installation suivant la revendication 26 ou 27, caractérisée en outre par :
un conduit de retour (90,92) connecté à ladite trémie de séparation (54) pour recevoir et recycler le gaz séparé en retour dans une boucle pneumatique fermée vers lesdits moyens d'amenée de gaz (88);
une unité de nettoyage et de refroidissement (56) dans ledit conduit de retour pour nettoyer et refroidir le gaz séparé ;
les moyens d'amenée de gaz (91) comprenant un compresseur placé après l'unité de nettoyage et de refroidissement afin de recevoir et de déplacer le gaz recyclé nettoyé et refroidi ; et
un dispositif (118) servant au moins au chauffage du gaz fourni à ladite amenée de gaz incluant au moins le gaz recyclé par ledit conduit.

29. Installation suivant la revendication 28, caractérisée en outre par un dispositif d'alimentation (110,118) pour fournir du gaz d'appoint à la boucle pneumatique.

30. Installation suivant la revendication 29, caractérisée en outre en ce que lesdits moyens d'amenée de gaz (16) et lesdits moyens d'évacuation de gaz (20) sont connectés extérieurement dans une boucle de conduit de gaz réducteur (16,20,86), cette boucle de réduction comprenant un dispositif de nettoyage/refroidissement (84), un compresseur (88) et un dispositif (98) agissant pour chauffer le gaz dans ladite boucle de gaz réducteur, ladite boucle pneumatique et ladite boucle de réduction étant interconnectées de façon à partager le compresseur (88) en commun, de sorte qu'une partie du gaz réducteur venant de la boucle de réduction sert de gaz d'appoint à la boucle pneumatique.

31. Installation suivant la revendication 26, caractérisée en outre en ce que lesdits moyens d'amenée de gaz (16) et lesdits moyens d'évacuation de gaz (20) sont connectés dans une boucle de conduit de gaz réducteur extérieure (16,20,86), cette boucle incluant un dispositif de nettoyage/refroidissement (84), un compresseur (88) et un dispositif (98) capable de chauffer le gaz dans ladite boucle de gaz réducteur, ledit tube de transport pneumatique et ledit conduit de recyclage formant une boucle séparée pour leur gaz et chaque boucle ayant un compresseur indépendant (88,91) et un dispositif indépendant (98,118) servant au chauffage du gaz dans la boucle de gaz pneumatique respective.

32. Installation suivant la revendication 30 ou 31, caractérisée en outre par une unité d'élimination de gaz carbonique (94) placée dans ladite boucle de réduction en aval dudit compresseur (88), et dans laquelle ledit dispositif (98,118) permettant le chauffage dans les boucles respectives est un réchauffeur.
